# EUROPEAN PATENT APPLICATION

(11) **EP 3 392 477 A1**
(43) Date of publication of application: **24.10.2018**
(21) Application number: 17189226.8
(22) Date of filing: 04.09.2017
(51) Int. Cl.: F01M 1/12, F01M 5/00, F04C 28/08, F04C 29/02, F04C 18/16, F16N 7/40

(54) **OIL CIRCUIT AND MACHINE PROVIDED OF SUCH OIL CIRCUIT**

(30) Priority: 21.04.2017 BE 20175278 T; 15.05.2017 WO PCT/IB2017/052855
(71) Applicant: ATLAS COPCO AIRPOWER, naamloze vennootschap, 2610 Wilrijk (BE)
(72) Inventor: DE BONTRIDDER, Thomas, 2610 Wilrijk (BE)
(74) Representative: Donné, Eddy

(57) **Abstract**

Oil circuit for lubricating and cooling a machine (1) with variable speed, whereby this oil circuit (5) is provided with an oil reservoir (10) with oil (11) and an oil pump (13) to be able to drive oil (11) from the oil reservoir (10) to the machine (1) via an oil pipe (12), whereby this oil pump (13) is driven by the motor (4) of the machine (1), whereby the oil circuit (5) is further provided with a bypass pipe (15) and a bypass valve (14) to be able to guide the pumped oil (11) back to the oil reservoir (10), whereby the oil circuit (5) is further provided with an oil cooler (16), characterised in that that the oil cooler (16) is placed in the bypass pipe (15).

## Description

The present invention relates to an oil circuit.

More specifically, the invention is intended to provide an improved oil circuit for a machine with a variable rpm or speed, i.e. with a VSD control.

This machine can be a compressor, expander or vacuum pump for example.

It is known that such machines are provided with an oil circuit to be able to lubricate components in the machine.

These components are for example, but not limited to, bearings and gears of the compressor element, expander element or vacuum pump element, the motor and the transmission.

The oil can also be used to cool certain components of the motor, compressor element and the transmission.

Traditionally an oil circuit for such a machine is arranged as follows.

Oil is pumped from an oil reservoir using an oil pump, after which the oil is guided to an oil cooler.

The cooler will cool the oil, before it is brought to the components to be lubricated and any components to be cooled of the machine.

During lubrication and cooling, the temperature of the oil will rise.

After the oil has gone through the machine, it will be guided back to the oil reservoir via a return pipe.

The hot oil will be guided by the oil pump to the oil cooler, where the oil will be cooled before being guided to the machine again.

In order to drive the oil pump, use is made of the motor that also drives the element.

This means that at a higher speed or rpm of the machine, when more oil is required, more oil is pumped and guided to the oil cooler and then the machine.

However, the oil pressure may not rise too high and at higher speeds or rpm of the machine, the oil pump will pump so much oil that the pressure becomes too high. Too high an oil pressure is not allowed, for example because too much oil is then used for the bearing lubrication such that the losses in the bearings rise.

That is why a bypass pipe with a valve is affixed in the oil circuit after the oil cooler, which as of a certain speed will drive a proportion of the pumped oil back to the oil reservoir.

The higher the speed of the motor, and thus the oil pump, the more oil the valve will guide back to the oil reservoir via the bypass pipe.

In this way the oil pressure in the oil circuit will not rise too high.

According to a conventional oil circuit, all oil that is driven to the machine will pass via the oil cooler.

Such known oil circuits thus also present the disadvantage that at low speeds of the machine, it is cooled too much as the oil cooler is designed to cool the oil at the maximum speed of the machine when the oil heats up the most due to losses in the rotating parts.

As a result, at these low speeds the oil will have a high viscosity, which will lead to oil losses in the bearings.

Moreover, a large temperature difference will occur in the oil at low and high speeds.

These large temperature differences are detrimental for the machine.

As a result of this a cooler will often be chosen whose cooling capacity is adjustable, which of course is more expensive and more complex.

Moreover, it will be necessary to use a large cooler designed for the entire oil flow at maximum speed.

The purpose of the present invention is to provide a solution to at least one of the aforementioned and other disadvantages.

The object of the present invention is an oil circuit for lubricating and cooling a machine with variable speed, whereby the oil circuit is provided with an oil reservoir with oil and an oil pump to be able to drive oil from the oil reservoir to the machine via an oil pipe whereby the oil pump is driven by the machine motor, whereby the oil circuit is further provided with a bypass pipe and a bypass valve to be able to guide the pumped oil back to the oil reservoir, whereby the oil circuit is further provided with an oil cooler, with the characteristic that the oil cooler is placed in the bypass pipe.

An advantage is that at low speeds of the machine, when little cooling is required, little oil will be guided via the bypass pipe and thus cooled; while at high speeds when more cooling is required more oil will be guided via the bypass pipe and thus will be cooled more.

By cooling less at low speeds and cooling more at high speeds, the temperature of the oil will remain more constant and thus the temperature differences smaller, compared to the known cooling circuits.

Moreover, the average oil temperature will also be higher, so that the oil will have a lower viscosity, which will lead to fewer oil losses in the bearings and at other locations where the oil is used for lubrication.

Another advantage is that at low speeds the oil will not be cooled as no oil will be guided via the bypass pipe and the oil cooler. In this way the oil will not have too great a viscosity at low speeds.

Moreover, at higher speeds the oil will not get too hot, because more oil is then guided via the cooler.

Another advantage is that the oil cooler can have smaller dimensions, i.e. a smaller oil cooler can be chosen for a smaller oil flow compared to the known oil circuits where the oil cooler is in the oil pipe before the bypass valve.

The invention also concerns a machine with a motor with variable speed, with the characteristic that the machine is provided with an oil circuit according to the invention.

This machine can be a compressor installation, expander installation or vacuum pump installation, but the invention is not limited to this.

With the intention of better showing the characteristics of the invention, a few preferred embodiments of an oil circuit according to the invention and a machine provided with such an oil circuit are described hereinafter, by way of an example without any limiting nature, with reference to the accompanying drawings, wherein:
figure 1 schematically shows a machine with an oil circuit according to the invention;
figure 2 schematically shows the change of the flow rate of the oil pump as a function of the motor speed;
figure 3 shows the change of the pressure in the oil pipe downstream from the bypass valve as a function of the motor speed.

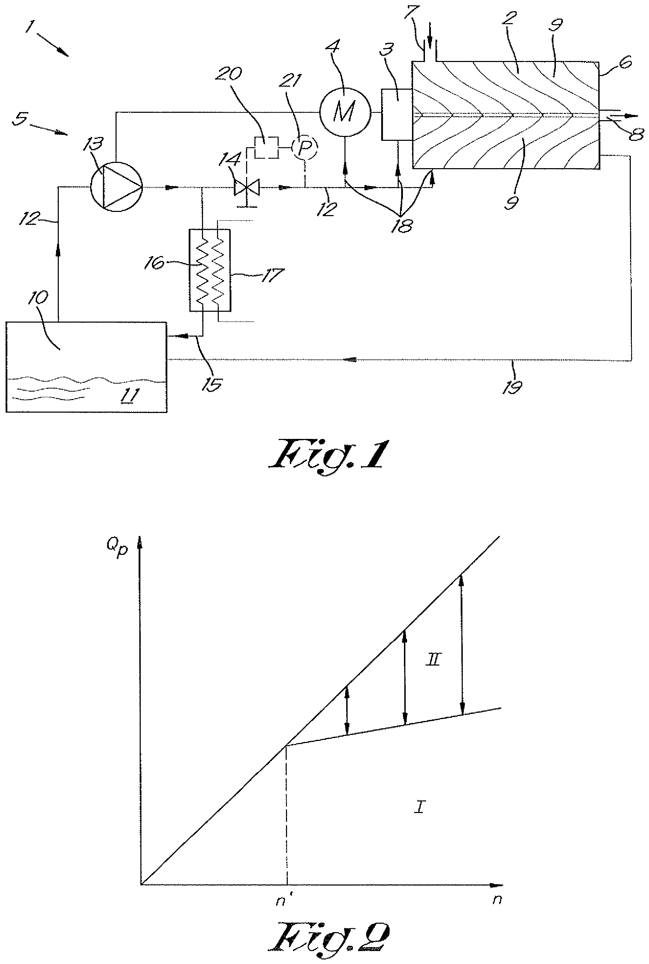

In this case the machine 1 shown in figure 1 is a compressor device 1, more specifically a screw compressor device with a screw compressor element 2, a transmission 3 (or 'gearbox') and a motor 4 with variable speed; whereby the machine 1 is provided with an oil circuit 5 according to the invention.

According to the invention it is not necessary for the machine 1 to be a compressor device 1, the machine 1 could also be an expander device or vacuum pump device for example.

The screw compressor element is provided with a housing 6 with an inlet 7 to draw in a gas and an outlet 8 for compressed gas. Two mating helical rotors 9 are mounted on bearings in the housing 6.

The oil circuit 5 will supply the machine with oil to lubricate and if need be cool the components of the machine 1.

These components are for example the gears in the transmission 3, the bearings on which the helical rotors 9 are mounted in the screw compressor element 2, etc.

The oil circuit 5 comprises an oil reservoir 10 with oil 11 and an oil pipe 12 to bring the oil 11 to the components of the machine 1 to be lubricated.

An oil pump 13 is provided in the oil pipe 12 to be able to pump oil 11 from the oil reservoir 10.

The oil pump 13 is driven by the motor 4 of the machine 1.

The oil pump 13 can be connected directly to the shaft of the motor 4 or to a drive shaft. This drive shaft is then connected to the motor 4 via a coupling. Then the gear is mounted on the driveshaft that is driven by the gearbox. One or more compressor elements 2 can be driven via the gearbox.

A bypass valve 14 and a bypass pipe 15, that leads from the oil pipe 12 back to the oil reservoir 10, are provided in the oil pipe 12 downstream from the oil pump 13.

Although in the example shown the bypass valve 14 is affixed in the oil pipe 12, it is not excluded that the bypass valve 14 is affixed in the bypass pipe 15. It is not excluded either that a three-way valve is used that is affixed at the location of the connection of the oil pipe 12 to the bypass pipe 15.

The bypass valve 14 will distribute the oil 11 that is pumped by the oil pump 13: a part will be driven to the components of the machine 1 to be lubricated via the oil pipe 12, the other part will be driven back to the oil reservoir 10 via the bypass pipe 15.

In this case, but not necessarily, the bypass valve 14 is a mechanical valve 14.

In a preferred embodiment, the valve 14 is a spring-loaded valve, i.e. the valve 14 comprises a spring or spring element, whereby the spring will open the valve 14 more or less depending on the pressure p before or after the valve 14.

In this case the valve will be a spring-loaded valve 14 that will close and open the bypass pipe 15 depending on the pressure p after the valve 14. When a certain threshold value of the pressure p is exceeded, the valve 14 will open the bypass pipe 14 so that a proportion of the pumped oil 11 will flow via the bypass pipe 15 to the oil reservoir 10.

According to the invention an oil cooler 16 is placed in the bypass pipe 15. This means that the oil 11 that flows via the bypass pipe 15 can be cooled, but that the oil 11 that flows via the oil pipe 12 to the components to be cooled will not be cooled.

In other words: cooled cold oil 11 will be guided to the oil reservoir 10 via the bypass pipe 15.

In this case the aforementioned oil cooler 16 forms part of a heat exchanger 18. The oil cooler 16 could be a plate cooler for example, but any type of cooler that is suitable for cooling the oil 11 can be used in this invention.

In this case the oil cooler 16 has a fixed or constant cooling capacity for a given oil flow and flow of the coolant. This means that the cooling capacity cannot be adjusted. By adjusting the flow of the coolant, it would indeed be possible to adjust the cooling capacity. However this is not necessary.

From the bypass valve 14, the oil pipe 12 runs to the components of the machine 1 to be lubricated and cooled if need be. Here the oil pipe 12 will be divided into subpipes 18 that may be partly integrated in the machine 1.

Furthermore the oil circuit 5 is provided with a return pipe 19 to carry the oil 11 from the machine 1 back to the oil reservoir 10, after it has lubricated and if need be cooled the components.

This oil 11 will have a higher temperature.

In the oil reservoir 10 this hot oil 11 will be mixed with the cooled cold oil 11 that is guided to the oil reservoir 10 via the bypass pipe 15.

The operation of the machine 1 with the oil circuit 5 is very simple and as follows.

When the machine 1 is driven by the motor 4, the mating rotating helical rotors 9 will draw in and compress air.

During the operation, the different components of the element 2, the transmission 3 and the motor 4 will be lubricated and cooled.

As the oil pump 13 is driven by the motor 4 of the compressor element 2, as of the start of the machine 1 it will pump oil 11 and drive it to the components of the machine 1 to be lubricated and cooled via the oil pipe 12 and subpipes 18.

The change of the flow rate Q of the oil pump 13 as a function of the speed n of the motor 4 is shown in figure 2.

As can be seen from this drawing, at low speeds n the oil pump 13 will pump less oil 11 compared to at high speeds n. This is advantageous, as at low speeds n less lubrication and cooling will be required and more at high speeds n.

At low speeds n, all oil 11 that is pumped will be driven to the compressor device 1, i.e. the bypass valve 14 will close the bypass pipe 15 so that no oil 11 can flow back to the oil reservoir 10 along the bypass pipe 15 and the oil cooler 16. As at low speeds n no cooling is required as the oil 11 will barely warm up, this is not a problem and this will ensure that the oil 11 does not get too cold.

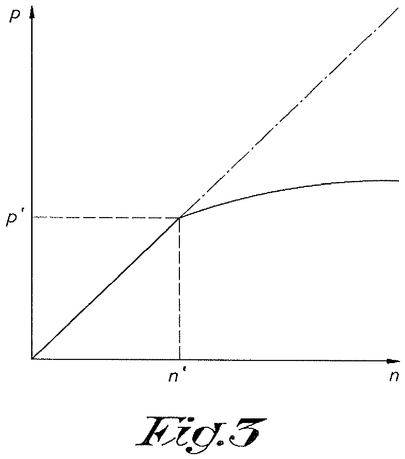

The change of the pressure p in the oil pipe 12 downstream from the bypass valve 14 is shown in figure 3.

The pressure will systematically rise in proportion to the speed n, until a specific pressure p' is reached corresponding to the speed n'.

As of this speed n' a pressure p' is reached such that the bypass valve 14 will partially be opened to the bypass pipe 15.

As a result at higher speeds than n' , a proportion of the pumped oil 11 will be driven through the bypass valve 14 via the bypass pipe 15.

This is schematically shown in figure 2 whereby the curve is divided into two branches: a proportion of the oil flow Q corresponding to zone I will be driven via the oil pipe 12 to the components of the compressor device 1 to be lubricated and cooled, while the other proportion of the oil flow Q corresponding to zone II will be driven back to the oil reservoir 10 via the bypass pipe 15.

Because the bypass valve 14 will open, as of the speed n' the pressure p will no longer rise in proportion to the speed n of the motor 4, but the curve flattens out, as shown in figure 3.

The higher the speed n, the more the bypass valve 15 will be pushed open by the higher pressure p downstream from the bypass valve 15 in the oil pipe 12. Indeed, at a higher speed n, the flow rate Q of the oil pump 13 will be greater, so that this pressure p will also rise such that the bypass valve 14 will open more.

The spring characteristics of the spring-loaded bypass valve 14 are chosen such that the bypass valve 14 is controlled by the spring such that a preset pressure p is reached after the bypass valve 14 in the oil pipe 12 according to the curve of figure 3.

The oil 11 that is guided via the bypass pipe 15 will pass through and be cooled by the oil cooler 16.

Because the cooled oil 11 that is guided via the bypass pipe 15 comes to the oil reservoir 10, the temperature of the oil 11 in the oil reservoir 10 will fall. This cold(er) oil 11 is then pumped by the oil pump 13 and brought to the compressor device 1.

As at high speeds n more heat is generated in the compressor device 1, more cooling will be required which is taken care of precisely by the above method.

At increasing speeds n, the oil pump 13 will always pump more oil 11 from the oil reservoir 10. As the pressure p after the bypass valve 14 will always be higher as a result, this bypass valve 14 will respond to this by always guiding more oil 11 via the bypass pipe 15, so that the pressure p does not rise too high and continues to follow the curve of figure 3.

As a result, with increasing speeds n, ever more oil 11 will be cooled, so that the rising temperature of the compressor device 1 can be accommodated at these increasing speeds n.

This is shown in figure 2, whereby the zone II always becomes greater at higher speeds n.

The above clearly shows that at low speeds n little or no oil 11 is cooled, while at increasing speeds n ever more oil 11 is cooled.

As a result of this the oil temperature will be more constant and higher on average, which ensures that the viscosity of the oil 11 will be lower on average so that there are fewer oil losses 13 in the oil pump 13 and at the lubrication locations.

As can be further seen from figure 2, at all speeds n the oil flow Q that goes via the bypass pipe 15 and the oil cooler 16 (zone II) will be smaller than the oil flow Q that is driven to the compressor device 1 (zone I).

This means that the oil cooler 16 can have smaller dimensions compared to the known cooling circuits.

The oil 11 of the compressor device 1 will be driven back to the oil reservoir 10 via the return pipe 19.

This oil 11 will have a higher temperature than the oil 11 in the oil reservoir 10.

In addition to this hot oil 11, the cooled oil 11 will also come to the oil reservoir 10 via the bypass pipe 15.

The two will be mixed together in the oil reservoir 10, which will result in an oil 11 at a certain temperature between the temperature of the cooled oil 11 and the hot oil 11.

As of the oil reservoir 10, the oil pump 13 will again pump the oil 11 and the method and control set out above will be followed.

Although in the example shown, a spring-loaded mechanical valve is used as a bypass valve 14, it is possible to use an electronic bypass valve 14 that is controlled by a controller 20.

In figure 1, this controller 20 is shown by a dotted line by way of an example. This controller 20 will control the bypass valve 14, for example on the basis of a signal from a pressure sensor 21 that is placed downstream from the bypass valve 14 in the oil pipe 12. The controller 20 will control the bypass valve 14 so that the pressure p, as registered by the pressure sensor 21, will follow the path of the curve of figure 3. In other words: the bypass valve 14 is controlled such that a preset pressure p is reached after the bypass valve 14 in the oil pipe 12.

Although in the examples shown and described, the oil circuit 5 is shown separate from the machine 1, it is of course not excluded that the oil circuit 5 is integrated in or physically forms part of the machine 1.

It is possible that a portion of the oil 11 from the oil circuit 5 is also injected into the housing 6 of the compressor element 2 in order to cool the screw compressors 9. As in this case oil 11 will get into the compressed air, an oil separator is preferably placed in the outlet 8 of the screw compressor element 2, whereby the separated oil 11 can be guided to the oil reservoir 10 by means of a return pipe 19.

In all embodiments shown and described above it is possible that the oil circuit 5 also comprises an oil filter. This oil filter can for example, but not necessarily, be affixed in the oil pipe 12 downstream from the bypass valve 14. The oil filter will collect any contaminants from the oil before sending it to the machine (1).

The present invention is by no means limited to the embodiments described as an example and shown in the drawings, but an oil circuit according to the invention and a machine provided with such an oil circuit can be realised in all kinds of forms and dimensions without departing from the scope of the invention.

## Claims

1. Oil circuit for lubricating and cooling a machine (1) with variable speed, whereby this oil circuit (5) is provided with an oil reservoir (10) with oil (11) and an oil pump (13) to be able to drive oil (11) from the oil reservoir (10) to the machine (1) via an oil pipe (12), whereby this oil pump (13) is driven by the motor (4) of the machine (1), whereby the oil circuit (5) is further provided with a bypass pipe (15) and a bypass valve (14) to be able to guide the pumped oil (11) back to the oil reservoir (10), whereby the oil circuit (5) is further provided with an oil cooler (16), **characterised in that** that the oil cooler (16) is placed in the bypass pipe (15).

2. Oil circuit according to claim 1, **characterised in that** the bypass valve (14) is controlled such that a preset pressure (9) is reached in the oil pipe (12) after the bypass valve (14).

3. Oil circuit according to claim 1 or 2, **characterised in that** the oil circuit (5) is further provided with a return pipe (19) to be able to guide oil (11) from the machine (1) back to the oil reservoir (10).

4. Oil circuit according to any one of the previous claims, **characterised in that** the oil cooler (16) has a fixed or constant cooling capacity.

5. Oil circuit according to any one of the previous claims, **characterised in that** the bypass valve (14) is a mechanical valve, preferably a spring-loaded valve.

6. Oil circuit according to any one of the previous claims, **characterised in that** the bypass valve (14) is placed in the oil pipe (12).

7. Machine with a motor (4) with a variable speed, **characterised in that** the machine (1) is provided with an oil circuit (5) according to any one of the previous claims.

8. Machine according to claim 7, **characterised in that** the machine (1) is a compressor device, expander device or vacuum pump device.
